# EUROPEAN PATENT APPLICATION

(11) **EP 4 832 478 A1**
(43) Date of publication of application: **28.10.2026**
(21) Application number: 23962368.9
(22) Date of filing: 22.12.2023
(51) Int. Cl.: H04N 9/31, G03B 21/14, G03B 21/20, G06T 17/20, G06T 3/40, G06T 3/02

(54) **IMAGE PROJECTION DEVICE AND OPERATING METHOD THEREOF**

(71) Applicant: LG Electronics Inc., Yeongdeungpo-gu Seoul 07336 (KR)
(72) Inventor: PARK, Jaesung, Seoul 06772 (KR); YOON, Ilseop, Seoul 06772 (KR); SHIN, Jonghwa, Seoul 06772 (KR); PARK, Junghoon, Seoul 06772 (KR)
(74) Representative: Schott, Jakob Valentin
(86) International application number: PCT/KR2023/021472
(87) International publication number: WO 2025/135262

(57) **Abstract**

The present disclosure relates to an image projection apparatus and an operating method thereof. An image projection apparatus according to one embodiment of the present disclosure comprises a light source assembly including at least one light source; a display element configured to output an image based on light output from the light source assembly; an optical lens configured to project the image output from the display element onto a real-world background; and a controller, wherein the controller is configured to determine a shape corresponding to a predetermined region of the real-world background onto which the image is projected, process an image to be projected based on a result of processing of the shape using a polygon mesh, and control the display element so that a predetermined image corresponding to the processed image is output.

## Description

### [Technical Field]

The present disclosure relates to an image projection apparatus and an operating method thereof and, more particularly, to an image projection apparatus capable of projecting an image optimized for a real-world background onto which the image is projected and an operating method thereof.

### [Background Art]

Recently, increasing consumption of high-quality and large-capacity multimedia content has created demand for enlargement of screens and improvement of image quality. Among display devices, an image projection apparatus is a device that projects an image to the outside using an optical device and has an advantage of easily implementing a large screen compared to other types of display devices.

A conventional image projection apparatus is generally configured to project an image toward a plane such as a screen installed to face the image projection apparatus or a wall surface corresponding to the screen. Recently, research has been conducted on projecting AR content onto various objects or spaces by applying augmented reality (AR), which is a technology for displaying virtual information on top of the real world, to an image projection apparatus.

Meanwhile, when an image is projected using augmented reality, an external device processes the image in consideration of a composition, a size, and the like of an object corresponding to a real-world background onto which the image is projected, and the image projection apparatus then receives and outputs the image processed by the external device. However, when a preprocessed image is projected, a problem arises in that the image projected onto the real-world background is distorted according to changes in a position of the object onto which the image is projected or a position or direction of the image projection apparatus.

### [Disclosure]

### [Technical Problem]

The present disclosure aims to solve the aforementioned problems and other problems.

Another object is to provide an image projection apparatus capable of projecting an image onto various real-world backgrounds without distortion and an operating method thereof.

Another object is to provide an image projection apparatus capable of processing an image in response to a change in a real-world background onto which the image is projected and an operating method thereof.

Another object is to provide an image projection apparatus capable of allowing a user to freely configure a real-world background onto which an image is projected and an operating method thereof.

Another object is to provide an image projection apparatus capable of automatically identifying a real-world background onto which an image is projected and processing the image and an operating method thereof.

### [Technical Solution]

To achieve the objects above, an image projection apparatus according to one embodiment of the present disclosure comprises a light source assembly including at least one light source; a display element configured to output an image based on light output from the light source assembly; an optical lens configured to project the image output from the display element onto a real-world background; and a controller, wherein the controller may determine a shape corresponding to a predetermined region of the real-world background onto which the image is projected, process an image to be projected based on a result of processing of the shape using a polygon mesh, and control the display element so that a predetermined image corresponding to the processed image is output.

To achieve the objects above, an operating method of an image projection apparatus according to one embodiment of the present disclosure comprises determining a shape corresponding to a predetermined region of a real-world background onto which an image is projected through an optical lens; processing an image to be projected based on a result of processing of the shape using a polygon mesh; and outputting a predetermined image corresponding to the processed image.

### [Advantageous Effects]

Effects of the image projection apparatus and the method thereof according to the present disclosure will be described as follows.

According to at least one embodiment of the present disclosure, as an image is processed in correspondence with a real-world background in the image projection apparatus, the image may be projected onto various real-world backgrounds without distortion.

According to at least one embodiment of the present disclosure, by using a polygon mesh, an image may be processed in response to a change in a real-world background onto which the image is projected.

According to at least one embodiment of the present disclosure, a user may freely configure a real-world background onto which an image is projected.

According to at least one embodiment of the present disclosure, an image may be processed using a camera by automatically identifying a real-world background onto which the image is projected.

Additional scope of applicability of the present disclosure will become apparent from the detailed description hereinafter. However, since various changes and modifications within the idea and scope of the present disclosure may be clearly understood by those skilled in the art, the detailed description and specific embodiments, such as preferred embodiments of the present disclosure should be understood as being given only as examples.

### [Description of Drawings]

FIG. 1 is a diagram illustrating an image system according to one embodiment of the present disclosure.
FIG. 2 is an internal block diagram of the image projection apparatus of FIG. 1.
FIG. 3 is an internal block diagram of the signal processing device of FIG. 2.
FIG. 4 illustrates an example of a structure of an optical device of an image projection apparatus according to one embodiment of the present disclosure.
FIG. 5 illustrates an example of an internal block diagram of the remote controller of FIG. 1.
FIGS. 6 and 7 are flowcharts illustrating an operating method of an image projection apparatus according to one embodiment of the present disclosure.
FIGS. 8A to 16 are diagrams referred to in description of an operation of an image projection apparatus according to one embodiment of the present disclosure.
FIG. 17 is a flowchart illustrating an operating method of an image projection apparatus according to another embodiment of the present disclosure.
FIG. 18 is a diagram referred to in description of an operation of an image projection apparatus according to another embodiment of the present disclosure.

### [Mode for Invention]

Hereinafter, the present disclosure will be described in detail with reference to the drawings. In the drawings, in order to clearly and concisely describe the present disclosure, parts that are not related to the description are omitted, and the same drawing reference numerals are used for identical or extremely similar parts throughout the specification.

The suffixes "module" and "part" used for components in the following description are given simply for the convenience of writing this specification, and do not in themselves impart any particularly important meaning or role. Therefore, the above "module" and "part" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof

In addition, in this specification, terms such as first, second, etc. may be used to describe various elements, but these elements are not limited by these terms. These terms are used only to distinguish one element from another.

Hereinafter, an optical device may refer to a device outputting visible light. Such an optical device may be applied to an image projection apparatus. Alternatively, the optical device may also be applied to a lighting device.

Hereinafter, an image projection apparatus may be referred to as a projector. Meanwhile, the image projection apparatus described in the present disclosure may also be mounted as one component within another device. For example, the image projection apparatus may be mounted in a mobile terminal, may be included in a home appliance such as an air conditioner, a refrigerator, a cooking appliance, or a robot cleaner, or may be mounted in a vehicle such as an automobile.

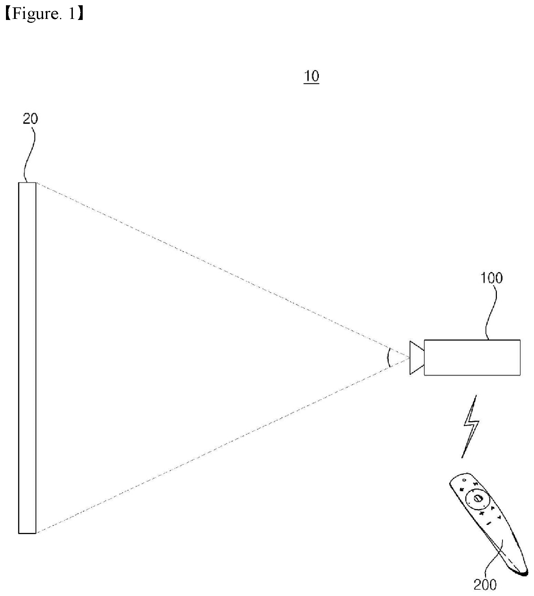

FIG. 1 is a diagram illustrating an image system according to one embodiment of the present disclosure.

Referring to FIG. 1, an image system 10 may include an image projection apparatus 10. The image projection apparatus 100 may project an image onto a real-world background 20. Hereinafter, an image projected by the image projection apparatus 100 may be referred to as a projected image. In FIG. 1, the real-world background 20 is illustrated as a screen having a flat surface, but the present disclosure is not limited thereto. A user may view a projected image projected onto the real-world background 20.

The image system 10 may include a remote controller 200. The remote controller 200 may be communicatively connected to the image projection apparatus 100 and may provide various control signals to the image projection apparatus 100. At this time, the remote controller 200 may establish a communication network with the image projection apparatus 100 and may include a device for transmitting various control signals to the image projection apparatus 100 through the established communication network or receiving, from the image projection apparatus 100, signals related to various operations processed by the image projection apparatus 100. In the present disclosure, the remote controller 200 is described as an example of a spatial remote controller, but the present disclosure is not limited thereto.

The image projection apparatus 100 may be connected to only one remote controller 200 or simultaneously connected to two or more remote controllers 200 and may change a projected image or adjust a state of the projected image based on control signals provided from the respective remote controllers 200.

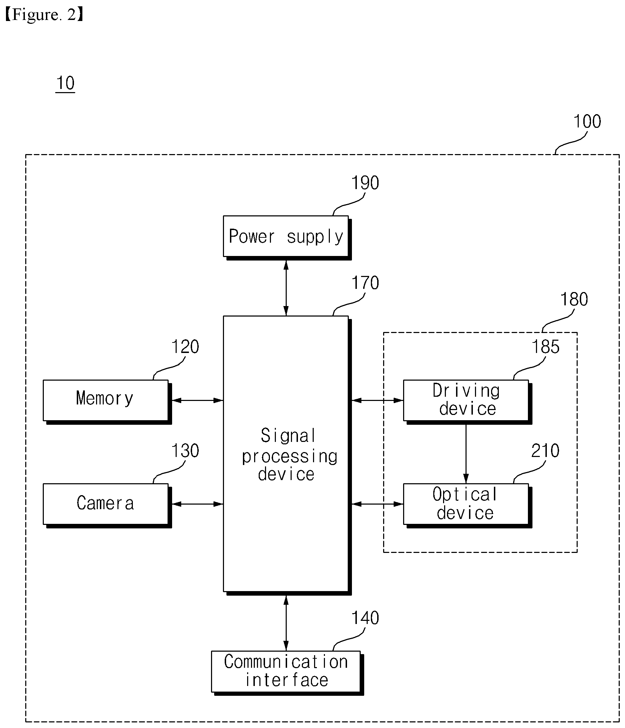

FIG. 2 is an internal block diagram of the image projection apparatus of FIG. 1.

Referring to FIG. 2, the image projection apparatus 100 may include a memory 120, a camera 130, a communication interface 140, a signal processing device 170, an image output device 180, and/or a power supply 190.

The memory 120 may store a program for processing and controlling each signal in the signal processing device 170 or may store a signal-processed image or data signal. For example, the memory 120 may store application programs designed for performing various tasks that can be processed by the signal processing device 170, and may provide some of the stored application programs selectively when requested by the signal processing device 170.

Program, or the like stored in the memory 120 is not particularly limited as long as they can be executed by the signal processing device 170.

FIG. 2 illustrates an embodiment in which the memory 120 is provided separately from the signal processing device 170, but the scope of the present disclosure is not limited thereto, and the memory 120 may be included in the signal processing device 170.

The memory 120 may include at least one of volatile memory (e.g. DRAM, SRAM, SDRAM, etc.), and nonvolatile memory (e.g. flash memory, hard disk drive HDD, and solid-state drive SSD, etc.). In various embodiments of the present disclosure, the memory 120 and a memory may be used interchangeably.

The camera 130 may include one or more cameras. The camera 130 may be embedded in the image projection apparatus 100 or separately disposed. The camera 130 may be disposed to face a direction in which an image is projected by the image projection apparatus 100. The camera 130 may capture an image of a real-world background onto which an image is projected. Image information captured by the camera 130 may be input to the signal processing device 170.

The communication interface 140 may serve as an interface with all external devices or networks connected to the image projection apparatus 100 in a wired or wireless manner. The communication interface 140 may receive data or power from an external device and transmit the data or power to the respective constituting elements within the image projection apparatus 100 and may allow data within the image projection apparatus 100 to be transmitted to the external device.

The communication interface 140 may receive a radio signal from a mobile terminal (not shown). Here, the radio signal may include various forms of data such as a voice call signal, a video call signal, text data, or image data. Meanwhile, the communication interface 140 may receive a control signal from the remote controller 200.

The communication interface 140 may include a short-range communication device (not shown). As a short-range communication technology, Bluetooth, Radio Frequency Identification (RFID), infrared Data Association (IrDA), Ultra-Wideband (UWB), ZigBee, Near Field Communication (NFC), and the like may be used.

The signal processing device 170 may include at least one processor. Here, the processor may be a general processor such as a central processing unit (CPU). Obviously, the processor may be a dedicated device such as an ASIC or another hardware-based processor.

The signal processing device 170 may control an overall operation of the image projection apparatus 100. The signal processing device 170 may control operations of respective units within the image projection apparatus 100. The signal processing device 170 may be referred to as a controller 170.

The signal processing device 170 may control a video image stored in the memory 120 or a video image received from the outside through the communication interface 140 to be output to the outside as a projected image.

The signal processing device 170 may control the image output device 180. The image output device 180 may include a driving device 185 and/or an optical device 210. The signal processing device 170 may control the optical device 210 or the driving device 185 that outputs visible light such as R, G, and B light. For example, the signal processing device 170 may output R, G, and B signals corresponding to a video image to the optical device 210 or the driving device 185.

The driving device 185 may drive the optical device 210. For example, the driving device 185 may drive a light source within the optical device 210.

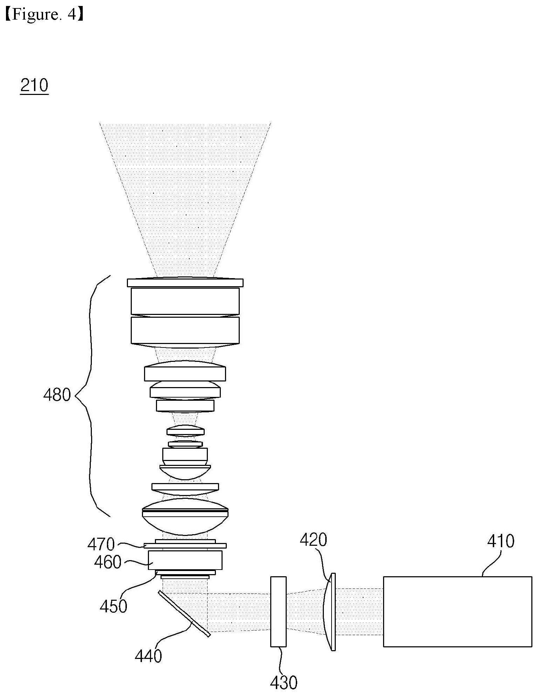

The optical device 210 may include optical components such as a light source and a lens for light output, particularly visible light output. In particular, the optical device 210 according to an embodiment of the present disclosure may simply implement color separation and color synthesis of light. This will be described below with reference to FIG. 4 and subsequent drawings.

The power supply 190 may receive external power or internal power under control of the signal processing device 170 and may supply power required for operation of respective components.

The power supply 190 may supply power throughout the image projection apparatus 100. Particularly, the power supply 190 may supply power to the signal processing device 170 implemented in the form of a system on chip (SOC), the image output device 180 for image display, the audio output device (not shown) for audio output, and the like.

Meanwhile, although not shown in FIG. 2, the image projection apparatus 100 may include an input unit. The input unit may be provided on one side of a main body of the image projection apparatus 100. For example, the input unit may include a touch pad, a physical button, and the like.

The input unit may receive various user commands related to the operation of the image projection apparatus 100 and may transmit, to the signal processing device 170, a control signal corresponding to an input command.

Meanwhile, the block diagram of the image projection apparatus 100 shown in FIG. 2 is only a block diagram for an embodiment of the present disclosure, and each component of the block diagram may be combined, added, or omitted according to the specifications of the image projection apparatus 100 that is actually implemented.

That is, as needed, two or more components may be combined into one component, or one component may be subdivided into two or more components. In addition, the functions performed by each block are for describing embodiments of the present disclosure, and the specific operations or devices do not limit the scope of the present disclosure.

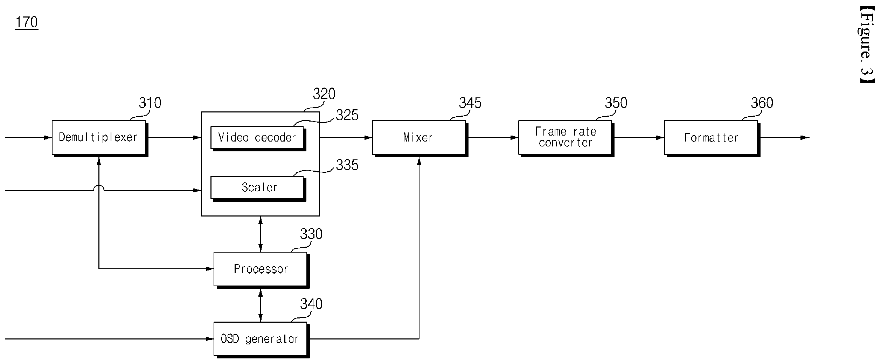

FIG. 3 is an internal block diagram of the controller of FIG. 2.

Referring to FIG. 3, the signal processing device 170 according to an embodiment of the present disclosure may include a demultiplexer 310, an image processor 320, a processor 330, an OSD generator 340, a mixer 345, a frame rate converter 350, and/or a formatter 360. Besides, the signal processing device 170 may further include an audio processor (not shown) and a data processor (not shown).

The demultiplexer 310 demultiplexes the input stream.

The image processor 320 may perform image processing on the demultiplexed video signal. To this end, the image processor 320 may include a video decoder 325 and a scaler 335.

The video decoder 325 decodes the demultiplexed video signal, and the scaler 335 performs scaling so that the resolution of the decoded video signal may be output to the display 180.

The video decoder 325 may include a decoder of various standards.

The processor 330 may control the overall operation of the image projection apparatus 100 or the signal processing device 170. In addition, the processor 330 may control operations of the demultiplexer 310, the image processor 320, the OSD generator 340, and the like in the signal processing device 170.

The OSD generator 340 generates an OSD signal according to a user input or by itself. The OSD generator 340 may generate a pointer based on a pointing signal input from the remote controller 200. The OSD generator 340 may include a pointing signal processing unit (not shown) for generating a pointer. The pointing signal processing unit (not shown) may be provided separately, rather than being provided in the OSD generator 240.

The mixer 345 may mix an OSD signal generated by the OSD generator 340 with a decoded image signal image-processed by the image processor 320. The mixed image signal may be supplied to the frame rate converter 350.

The frame rate converter (FRC) 350 may convert the frame rate of an input image. Meanwhile, the frame rate converter 350 may also directly output the frame rate without additional frame rate conversion.

Meanwhile, the formatter 360 may receive the signal mixed by the mixer 345, i.e., the OSD signal and the decoded image signal, and may perform signal conversion for input to the image output device 180. For example, the formatter 360 may output a low-voltage differential signal (LVDS).

Meanwhile, the block diagram of the signal processing device 170 shown in FIG. 3 is just a block diagram for an embodiment of the present disclosure. Each component of the block diagram may be integrated, added, or omitted according to the specifications of the actually implemented signal processing device 170.

In particular, the frame rate converter 350 and the formatter 360 are not provided in the signal processing device 170, but may be separately provided respectively or may be provided separately as a single module.

FIG. 4 illustrates an example of a structure of an optical device of an image projection apparatus according to one embodiment of the present disclosure.

Referring to FIG. 4, the optical device 210 may include a light source assembly 410 outputting light, a condenser lens 420, a diffuser 430 diffusing light passing through the condenser lens 420, a reflection mirror 440, a display element 450, a Total Internal Reflection (TIR) prism 460, an actuator 470, and/or an optical lens 480.

The light source assembly 410 may include at least one light source. For example, the light source assembly 410 may include a plurality of laser diodes respectively outputting red light, blue light, and green light. The light source assembly 410 may include at least one dichroic filter reflecting part of incident light and transmitting another part thereof. At this time, as light output from the light source included in the light source assembly 410 is transmitted or reflected through the dichroic filter, color separation and color synthesis of light may be performed.

The condenser lens 420 may change a path of light output from the light source assembly 410. Light paths of a plurality of colors output from the light source assembly 410 and passing through the condenser lens 420 may be directed toward a focal point of the condenser lens 420.

The reflection mirror 440 may reflect light passing through the diffuser 430 in a direction toward the display element 450.

The display element 450 may output a projected image based on light reflected by the reflection mirror 440. According to one embodiment, the display element 450 may include a digital micro-mirror device (DMD). The digital micro-mirror device may be constructed by arranging a plurality of tiny mirrors. At this time, each of the plurality of mirrors may serve as a pixel and may selectively reflect light reflected by the reflection mirror 440 to implement a projected image. As light loss is minimized by operation of the micro-mirrors, light efficiency is improved and color reproducibility is enhanced, thereby enabling output of a 4K projected image or an 8K projected image. Meanwhile, in the present disclosure, the display element 450 is described as an example of a digital micro-mirror device, but the present disclosure is not limited thereto. For example, the display element 450 may include a transmissive display panel such as a liquid crystal display panel.

The optical lens 480 may include a projection lens. The optical lens may adjust a size of a projected image.

Meanwhile, although not shown in the drawing, the optical device 210 may further include a collimator lens, a fly-eye lens, and an illumination lens. Accordingly, the structure of the optical device 210 may be simplified while securing high luminance performance.

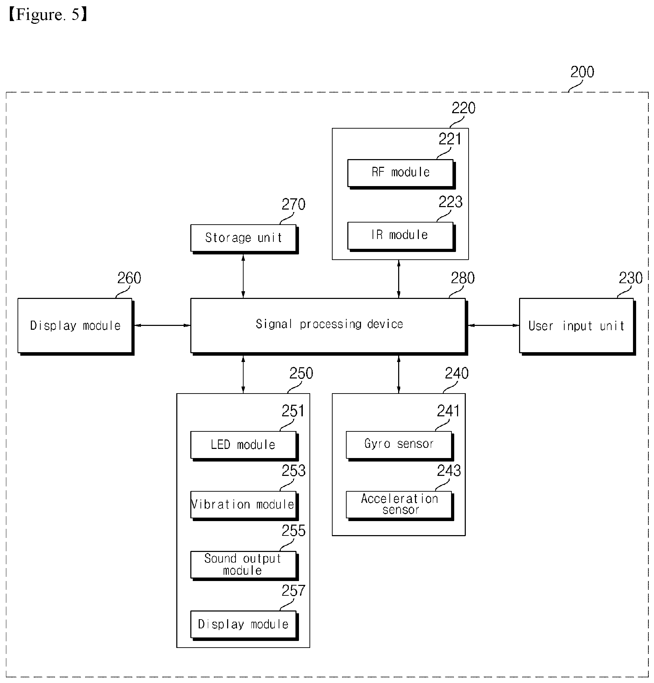

FIG. 5 is an internal block diagram of the remote control device of FIG. 1.

Referring to FIG. 5, the remote controller 200 includes a wireless transceiver 220, a user input device 230, a sensor device 240, an output device 250, a power supply 260, a memory 270, and a signal processing unit 280.

The wireless transceiver 220 transmits/receives a signal to/from the image projection apparatus 100.

In the present embodiment, the remote controller 200 may include an RF module 221 for transmitting and receiving signals to and from the image projection apparatus 100 according to a RF communication standard. In addition, the remote controller 200 may include an IR module 223 for transmitting and receiving signals to and from the image projection apparatus 100 according to a IR communication standard.

The remote controller 200 may transmit a signal containing information on the motion of the remote controller 200 to the image projection apparatus 100 through the RF module 221. The remote controller 200 may receive the signal transmitted by the image projection apparatus 100 through the RF module 221.

The remote controller 200 may transmit a command related to power on/off, a size of a projected image, and the like to the image projection apparatus 100 through the IR module 223.

The user input device 230 may be implemented by a keypad, a button, a touch pad, a touch screen, or the like. The user may operate the user input device 230 to input a command related to the image projection apparatus 100 to the remote controller 200.

When the user input device 230 includes a hard key button, the user may input a command related to the image projection apparatus 100 to the remote controller 200 through a push operation of the hard key button.

When the user input device 230 includes a touch screen, the user may touch a soft key of the touch screen to input the command related to the image projection apparatus 100 to the remote controller 200.

Meanwhile, the user input device 230 may include various types of input means, such as a scroll key, a jog key, etc., which may be operated by the user, and the present disclosure does not limit the scope of the present disclosure.

The sensor device 240 may include a gyro sensor 241 or an acceleration sensor 243. The gyro sensor 241 may sense information regarding the motion of the remote controller 200.

The gyro sensor 241 may sense information on the operation of the remote controller 200 based on the x, y, and z axes. The acceleration sensor 243 may sense information on the moving speed of the remote controller 200. Meanwhile, the sensor device 240 may further include a distance measuring sensor sensing the distance to the display 180.

The output device 250 may output an image or an audio signal corresponding to the operation of the user input device 230 or a signal transmitted from the image projection apparatus 100. Through the output device 250, the user may recognize whether the user input device 230 is operated or whether the image projection apparatus 100 is controlled.

The output device 250 may include an LED module 251 including at least one light emitting device (e.g., a light emitting diode (LED)), a vibration module 253 for generating a vibration, an audio output module 255 for outputting an audio, and/or a display module 257 for outputting an image

The power supply 260 supplies power to the remote controller 200. The power supply 260 may include at least one battery (not shown).

When movement of the remote controller 200 is not detected through the sensor device 240 for a predetermined period of time, the power supply 260 may stop supplying power to each component included in the remote controller 200 thereby preventing unnecessary power consumption.

The power supply 260 may resume supplying power to each component included in the remote controller 200 when a predetermined event occurs. For example, the power supply 260 may resume supplying power to each component when a predetermined key provided in the remote controller 200 is manipulated. For example, the power supply 260 may resume supplying power to each component included in the remote controller 200 when movement of the remote controller 200 is detected through the sensor device 240.

The memory 270 may store various types of programs, application data, and the like necessary for the control or operation of the remote controller 200.

If the remote controller 200 wirelessly transmits and receives a signal to/from the image projection apparatus 100 through the RF module 221, the remote controller 200 and the image projection apparatus 100 transmit and receive a signal through a certain frequency band. The signal processing unit 280 of the remote controller 200 may store information regarding a frequency band or the like for wirelessly transmitting and receiving a signal to/from the image projection apparatus 100 paired with the remote controller 200 in the memory 270 and may refer to the stored information.

The signal processing unit 280 may include at least one processor, and may control the overall operation of the remote controller 200 using the processor included therein.

The signal processing unit 280 may transmit a signal corresponding to a certain key operation of the user input device 230 or a signal corresponding to the motion of the remote controller 200 sensed by the sensor device 240 to the image projection apparatus 100 through the wireless transceiver 220.

The image projection apparatus 100 may wirelessly transmit and receive a signal to and from the remote controller 200. The image projection apparatus 100 may receive a signal transmitted by the remote controller 200 according to an IR communication standard through the communication interface 140.

The image projection apparatus 100 may correct a hand shake or an error from a signal corresponding to the operation of the remote controller 200 received through the communication interface 140 and calculate the coordinate value (x, y) of the pointer corresponding to the remote controller 200.

The signal of the remote controller 200 inputted to the image projection apparatus 100 may be transmitted to the signal processing unit 170 of the image projection apparatus 100. The signal processing unit 170 may determine the information on the operation of the remote controller 200 and the key operation from the signal transmitted from the remote controller 200, and, correspondingly, control the image projection apparatus 100.

For another example, the remote controller 200 may calculate the pointer coordinate value corresponding to the operation and output it to the image projection apparatus 100. In this situation, the image projection apparatus 100 may transmit information on the received pointer coordinate value to the signal processing unit 170 without a separate correction process of hand shake or error.

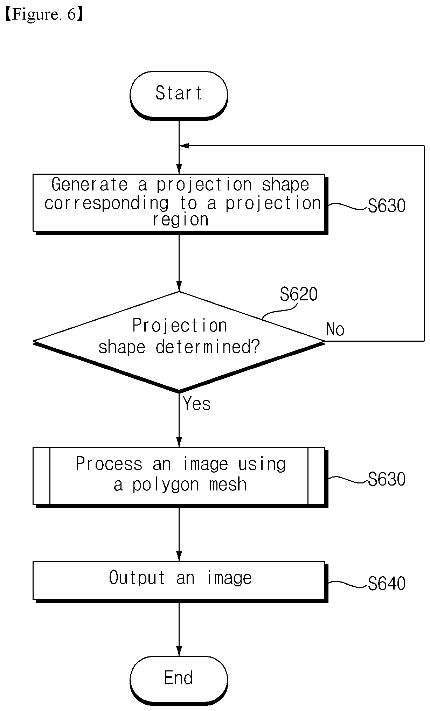

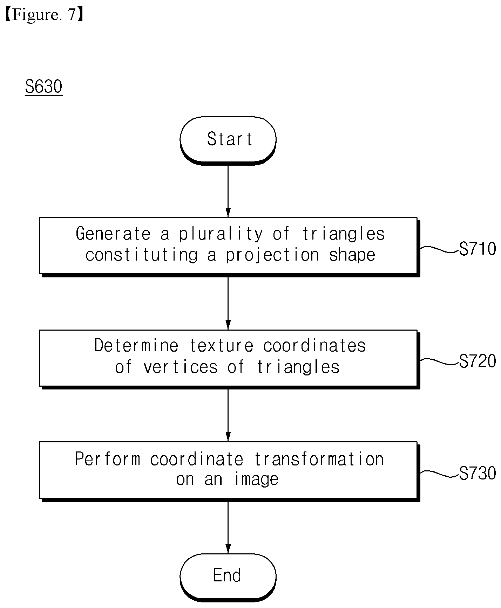

FIGS. 6 and 7 are flowcharts illustrating an operating method of an image projection apparatus according to one embodiment of the present disclosure.

Referring to FIG. 6, in the S610 step, the image projection apparatus 100 may generate a shape corresponding to a region of a real-world background onto which an image is projected (hereinafter, referred to as a projection region). Here, the shape corresponding to the projection region (hereinafter, referred to as a projection shape) may be a polygonal shape such as a triangle or a quadrangle. According to one embodiment, the image projection apparatus 100 may project a user interface (UI) image including a projection shape. At this time, a user may configure a shape, a size, and so on of the projection shape using the remote controller 200.

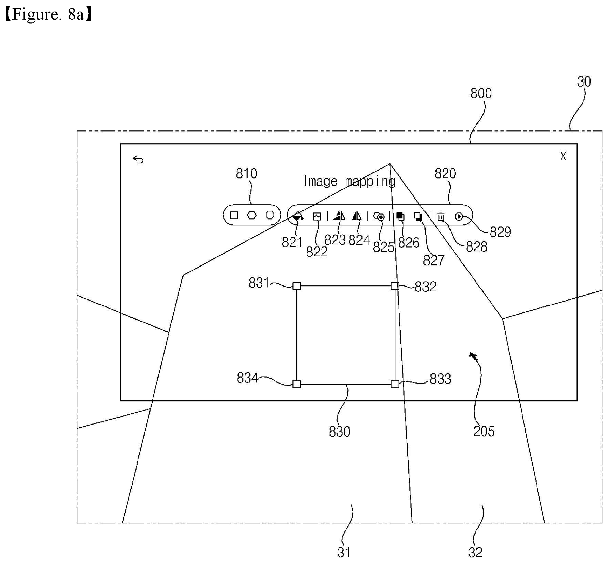

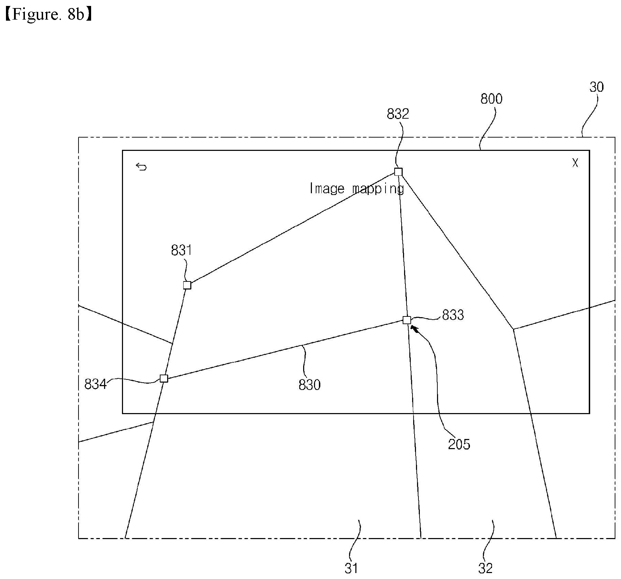

Referring to FIGS. 8A and 8B, the image projection apparatus 100 may output a UI image 800 onto a real-world background 30 onto which an image is projected. The UI image 800 may include a shape object 810 including a plurality of shapes and a tool object 820 including tools for adjusting a color, a shape, an orientation, a position, and the like of a shape. For example, the tool object 820 may include a tool 821 for adjusting a color of a shape, a tool 822 for displaying an image in a region corresponding to a shape, a tool 823 for rotating a shape, a tool 824 for symmetrically moving a shape, a tool 825 for copying a shape, a tool 826 for placing a shape before another shape, a tool 827 for placing a shape after another shape, a tool 828 for deleting a shape, and a tool 829 for completing configuration of a shape.

The user may rotate or move the remote controller 200 upward, downward, leftward, rightward, forward, or backward. At this time, a pointer 205 included in the UI image 800 may be displayed in correspondence with movement of the remote controller 200. Since the pointer 205 is moved and displayed according to movement of the remote controller 200 in the three-dimensional space, the remote controller 200 may be referred to as a spatial remote controller or a 3D pointing device. Meanwhile, a moving speed or a moving direction of the pointer 205 may correspond to a moving speed or a moving direction of the remote controller 200.

The user may select one of shapes included in the shape object 810 using the pointer 205. When the user selects a quadrangle using the pointer 205, a first shape 830 corresponding to the quadrangle may be displayed through the UI image 800.

The user may adjust positions of vertices 831 to 834 of the first shape 830 using the pointer 205. For example, the user may select one of the vertices 831 to 834 of the first shape 830 using the pointer 205 and then adjust a position of the selected vertex by adjusting a position of the pointer 205. At this time, the image projection apparatus 100 may determine positions of the vertices 831 to 834 of the first shape 830 according to the position of the pointer 205. Also, the image projection apparatus 100 may determine a shape, a position, a size, and the like of the first shape 830 based on the positions of the vertices 831 to 834 of the first shape 830.

When the user selects, using the pointer 205, the tool 829 for completing configuration of a shape on the UI screen 800, the image projection apparatus 100 may determine a shape of a projection shape.

Referring again to FIG. 6, in the S620 step, the image projection apparatus 100 may determine whether the projection shape is determined.

In the S630 step, the image projection apparatus 100 may process an image corresponding to a projected image using a polygon mesh. Here, the polygon mesh may refer to a set of polygons such as triangles and quadrangles constituting an object and vertices thereof. For example, the image projection apparatus 100 may process an image corresponding to a projected image based on a result of processing the projection shape using the polygon mesh. In the present disclosure, processing of an image corresponding to a projected image using a polygon mesh including a plurality of triangles will be described as an example. In this regard, description will be given with reference to FIG. 7.

Referring to FIG. 7, in the S710 step, the image projection apparatus 100 may generate a plurality of first triangles constituting the projection shape. For example, the image projection apparatus 100 may determine the number of the plurality of first triangles according to a predetermined resolution. At this time, as the resolution increases, the number of the first triangles may increase.

According to one embodiment, the image projection apparatus 100 may determine coordinates of vertices of the plurality of first triangles constituting the projection shape based on linear interpolation. The image projection apparatus 100 may determine coordinates of a plurality of points positioned on line segments connecting vertices of the projection shape. At this time, the image projection apparatus 100 may determine coordinates of the plurality of points according to a predetermined resolution. For example, when the predetermined resolution is 2, the image projection apparatus 100 may determine coordinates of a plurality of points bisecting respective line segments. For example, when the predetermined resolution is 3, the image projection apparatus 100 may determine coordinates of a plurality of points trisecting respective line segments.

The image projection apparatus 100 may generate a plurality of quadrangles constituting the projection shape by connecting vertices of the projection shape and/or a plurality of points positioned on line segments to each other. At this time, the image projection apparatus 100 may generate a plurality of first triangles constituting the projection shape by dividing each of the plurality of quadrangles constituting the projection shape into two triangles using a diagonal line.

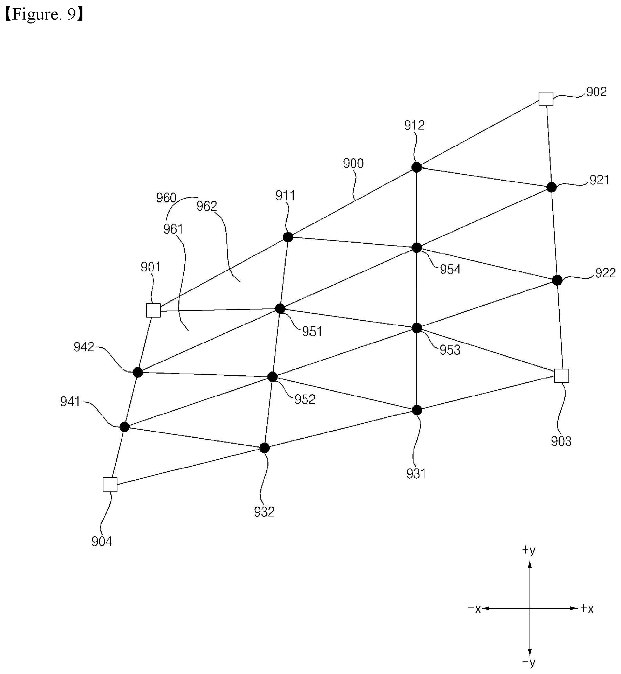

Referring to FIG. 9, when a projection shape 900 is a quadrangle, the image projection apparatus 100 may determine coordinates of a plurality of points positioned on line segments connecting vertices 901 to 904 of the projection shape 900. For example, the image projection apparatus 100 may determine coordinates of two points 911 and 912 positioned on a first line segment connecting a first vertex 901 and a second vertex 902, two points 921 and 922 positioned on a second line segment connecting the second vertex 902 and a third vertex 903, two points 931 and 932 positioned on a third line segment connecting the third vertex 903 and a fourth vertex 904, and two points 941 and 942 positioned on a fourth line segment connecting the first vertex 901 and the fourth vertex 904.

The image projection apparatus 100 may generate a plurality of quadrangles constituting the projection shape using a plurality of additional line segments connecting the two points 911 and 912 positioned on the first line segment and the two points 931 and 932 positioned on the third line segment to each other and connecting the two points 921 and 922 positioned on the second line segment and the two points 941 and 942 positioned on the fourth line segment to each other. At this time, the vertices 901 to 904 of the projection shape 900, the plurality of points 911, 912, 921, 922, 931, 932, 941, and 942 positioned on the first to fourth line segments, and a plurality of points 951 to 954 at which the plurality of additional line segments intersect may correspond to vertices of the plurality of quadrangles constituting the projection shape 900.

The image projection apparatus 100 may generate a plurality of first triangles constituting the projection shape 900 by dividing each of the plurality of quadrangles constituting the projection shape 900 into two triangles using a diagonal line. For example, a first quadrangle 960 constituting the projection shape 900 may be divided into two triangles 961 and 962 by a diagonal line connecting the first vertex 901 and a third vertex 951.

Referring again to FIG. 7, in the S720 step, the image projection apparatus 100 may determine texture coordinates corresponding to vertices of each of the plurality of first triangles constituting the projection shape. For example, the image projection apparatus 100 may determine texture coordinates for coordinates of vertices of each of the plurality of first triangles using a UV mapping technique. Meanwhile, in the present disclosure, determination of texture coordinates using the UV mapping technique is described as an example, but the present disclosure is not limited thereto. For example, various mapping techniques such as Mip mapping, Normal mapping, Bump mapping, Displacement mapping, Procedural mapping, Light mapping, Reflection mapping, and Refraction mapping may be used.

In the S730 step, the image projection apparatus 100 may perform coordinate transformation on an image corresponding to a projected image. For example, the image projection apparatus 100 may transform coordinates of pixels of the image corresponding to the projected image using an affine transformation.

At this time, the image projection apparatus 100 may transform coordinates of pixels of the image corresponding to the projected image based on coordinates and texture coordinates of vertices of a first triangle corresponding to each of the pixels of the image corresponding to the projected image among a plurality of first triangles constituting the projection shape. For example, the image projection apparatus 100 may determine coordinates and texture coordinates of vertices of a first triangle corresponding to each of the pixels of the image corresponding to the projected image based on a plurality of second triangles constituting the image corresponding to the projected image and corresponding to the plurality of first triangles constituting the projection shape.

According to one embodiment, the image projection apparatus 100 may transform coordinates of pixels of the image corresponding to the projected image based on Eq. 1 below. [Eq.1] $\left[\begin{matrix}x ′ \\ y ′\end{matrix}\right] = \left[\begin{matrix}m 11 & m 12 & dx \\ m 21 & m 22 & dy\end{matrix}\right] \left[\begin{matrix}x \\ y \\ 1\end{matrix}\right]$

In Eq. 1 above, (x, y) may denote coordinates of a pixel of an image corresponding to a projected image, and (*x', y'*) may denote coordinates of a transformed pixel. Meanwhile, m11, m12, m21, *m*22, *dx,* and *dy* included in the transformation matrix may be determined based on Eq. 2 below. [Eq.2] $\begin{matrix}m 11 = \frac{\left(\left(sy2-sy1\right)\times p0x+\left(sy0-sy2\right)\times p1x+\left(sy1-sy0\right)\times p2x\right)}{a} \\ m 12 = \frac{\left(\left(sy2-sy1\right)\times p0y+\left(sy0-sy2\right)\times p1y+\left(sy1-sy0\right)\times p2y\right)}{a} \\ m 21 = \frac{\left(\left(sx2-sx1\right)\times p0x+\left(sx0-sx2\right)\times p1x+\left(sx1-sx0\right)\times p2x\right)}{a} \\ m 22 = \frac{\left(\left(sx2-sx1\right)\times p0y+\left(sx0-sx2\right)\times p1y+\left(sx1-sx0\right)\times p2y\right)}{a} \\ m 22 = \frac{\left(\left(sx2-sx1\right)\times p0y+\left(sx0-sx2\right)\times p1y+\left(sx1-sx0\right)\times p2y\right)}{a} \\ dx = \frac{\left(\left(sx2\times sy1-sx1\times sy2\right)\times p0x+\left(sx0\times sy2-sx2\times sy0\right)\times p1x+\left(sx1\times sy0-sx0\times sy1\right)\times p2x\right)}{a} \\ dy = \frac{\left(\left(sx2\times sy1-sx1\times sy2\right)\times p0y+\left(sx0\times sy2-sx2\times sy0\right)\times p1y+\left(sx1\times sy0-sx0\times sy1\right)\times p2x\right)}{a} \\ a = sx 0 \times \left(sy2-sy1\right) - sx 1 \times sy 2 + sx 2 \times sy 1 + \left(sx1-sx2\right) \times sy 0\end{matrix}$

In Eq. 2 above, (*sx*0*, sy*0)*, (sx*1*, sy*1)*,* and (*sx*2*, sy*2) may denote coordinates of vertices of a first triangle constituting a projection shape, and (*p*0*x, p*0*y),* (*p*1*x, p*1*y*), and (*p*2*x, p*2*y*) may denote texture coordinates corresponding to the vertices of the first triangle constituting the projection shape.

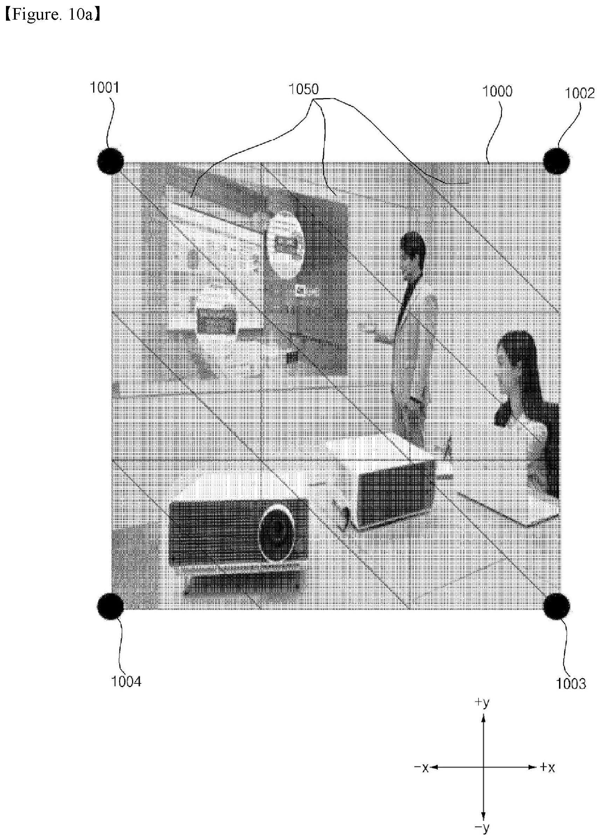

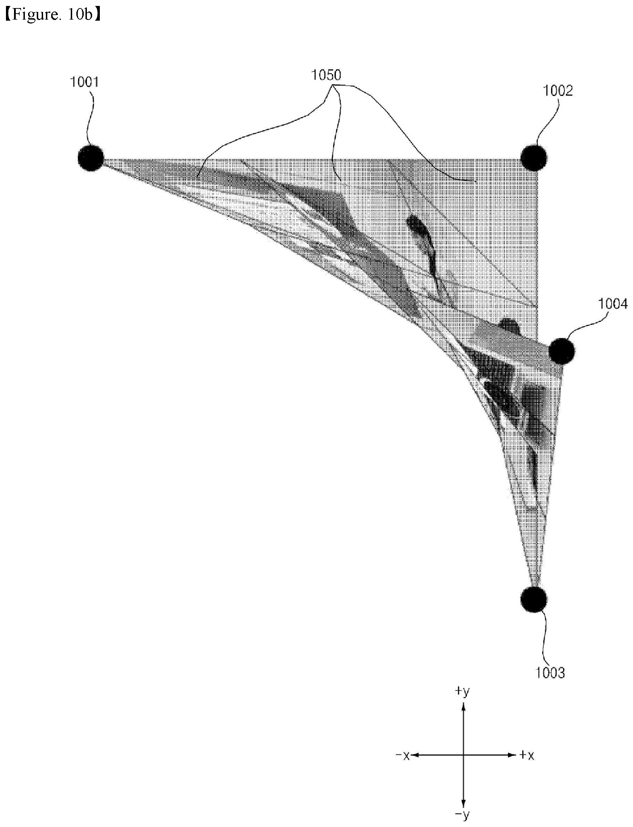

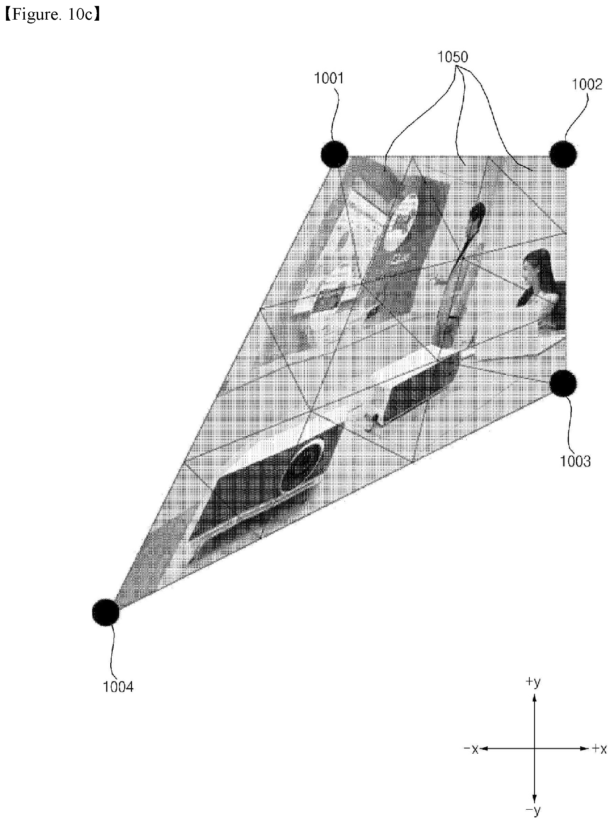

Referring to FIGS. 10A to 10C, the image projection apparatus 100 may output a projected image corresponding to a shape of a projection shape 1000. A user may configure the shape of the projection shape 1000 using the remote controller 200. In response to a user changing positions of vertices 1001 to 1004 of the projection shape 1000 using the remote controller 200, the shape of the projection shape 1000 may be changed.

In response to a change in the shape of the projection shape 1000, coordinates of a plurality of first triangles 1050 constituting the projection shape 1000 may be changed. Also, in response to the change in the shape of the projection shape 1000, texture coordinates corresponding to the plurality of first triangles 1050 constituting the projection shape 1000 may be changed. At this time, transformed coordinates for pixels of the projected image may be changed in response to the change in the shape of the projection shape 1000.

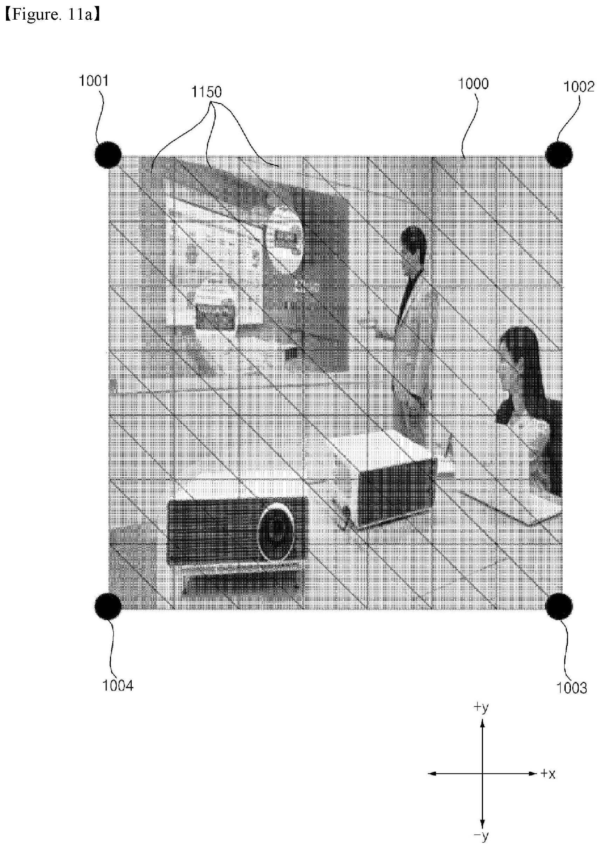

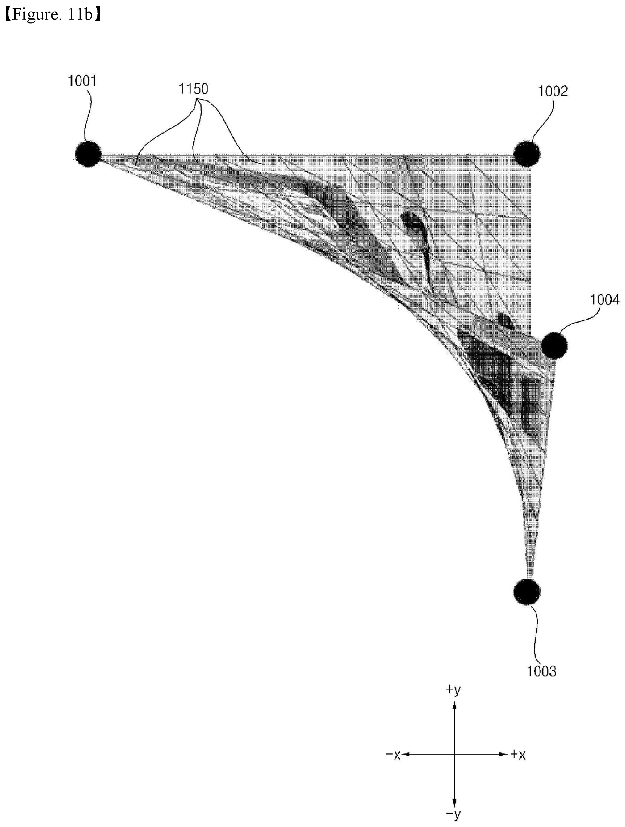

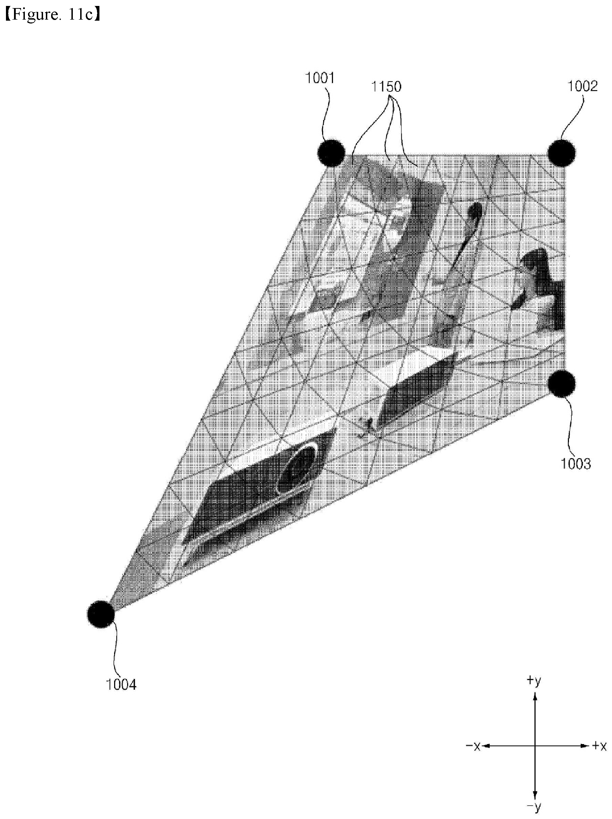

Meanwhile, referring to FIGS. 11A to 11C, as resolution increases, the number of a plurality of first triangles 1150 constituting the projection shape 1000 may increase. As the number of the plurality of first triangles 1150 constituting the projection shape 1000 increases, coordinates of vertices of the plurality of first triangles 1150 may be more finely changed in response to a change in the shape of the projection shape 1000. Also, as the number of the plurality of first triangles 1150 constituting the projection shape 1000 increases, transformed coordinates for pixels of the projected image may be more finely changed.

Referring again to FIG. 6, in the S640 step, the image projection apparatus 100 may output an image processed using a polygon mesh. For example, the image projection apparatus 100 may project an image subjected to coordinate transformation using affine transformation toward a projection region.

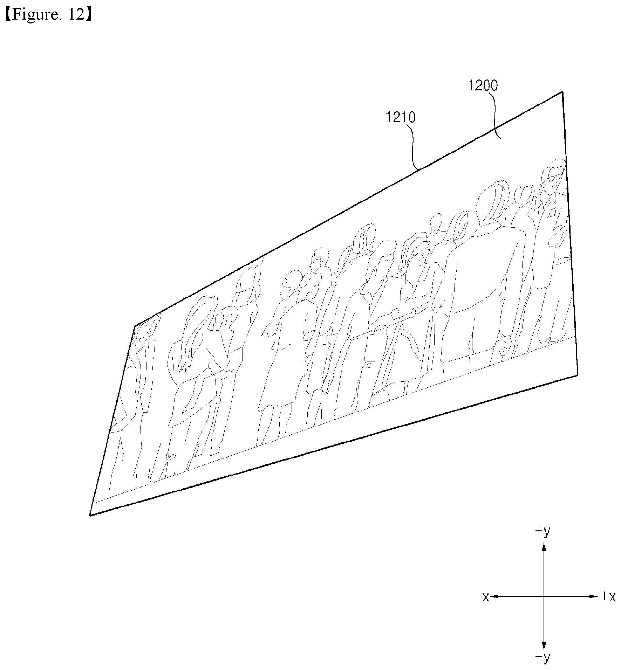

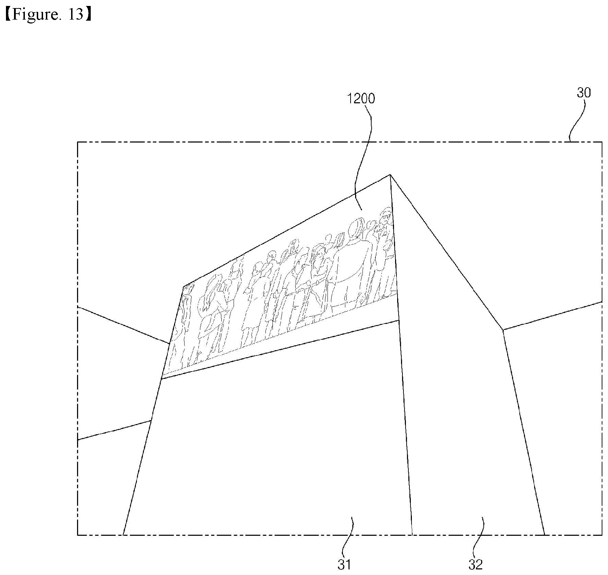

Referring to FIGS. 12 and 13, coordinates of pixels of a projected image 1200 may be transformed in correspondence to a shape of a projection shape 900. At this time, the shape 1210 of the projected image 1200 may correspond to the shape of the projection shape 900.

As a user configures the shape of the first shape 830 displayed on the UI image 800 in correspondence to a first wall surface 31 of a real-world background 30, the shape of the projection shape 900 may correspond to the first wall surface 31. Also, the shape of the projected image 1200 corresponding to the shape of the projection shape 900 may also correspond to the first wall surface 31 of the real-world background 30. Accordingly, when the image projection apparatus 100 projects the projected image 1200 toward the real-world background 30, the projected image 1200 may be displayed on the first wall surface 31 of the real-world background 30 without distortion.

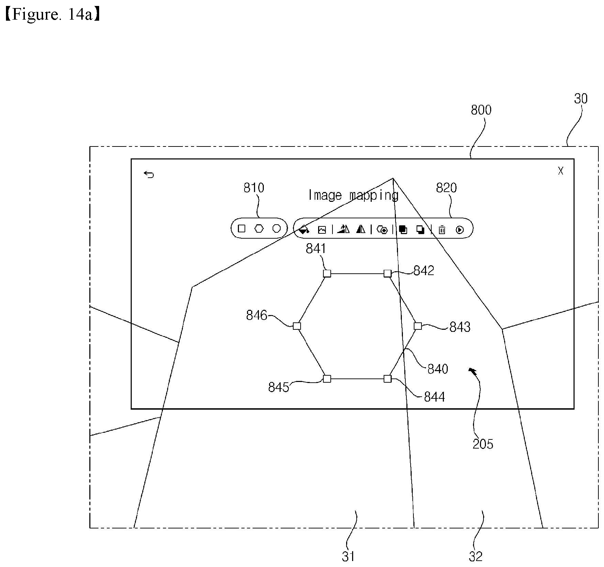

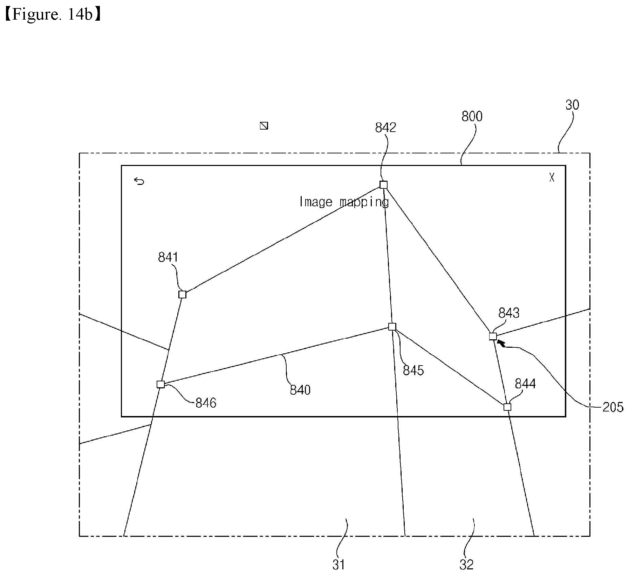

Meanwhile, referring to FIGS. 14A and 14B, the user may select one of shapes included in the shape object 810 using the pointer 205. When the user selects a hexagon using the pointer 205, a second shape 840 corresponding to the hexagon may be displayed through the UI image 800.

The user may adjust positions of vertices 841 to 846 of the second shape 840 using the pointer 205. For example, the user may select one of the vertices 841 to 846 of the second shape 840 using the pointer 205 and then adjust a position of the selected vertex by adjusting the position of the pointer 205. At this time, the image projection apparatus 100 may determine positions of the vertices 841 to 846 of the second shape 840 according to the position of the pointer 205. Also, the image projection apparatus 100 may determine a shape, a position, a size, and the like of the second shape 840 based on the positions of the vertices 841 to 846 of the second shape 840.

According to one embodiment, the user may divide the second shape 840 into a plurality of sub-shapes using the tool object 820 included in the UI image 800. For example, the user may divide the second shape 840 into a plurality of sub-shapes using a diagonal line connecting two vertices 842 and 845 among the plurality of vertices 841 to 846 of the second shape 840 by using the tool object 820. At this time, the user may configure a plurality of images to be respectively displayed on the plurality of sub-shapes.

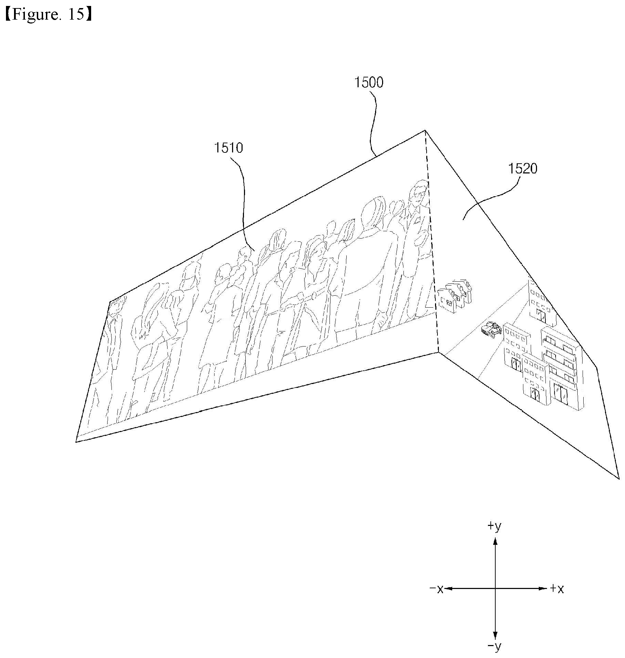

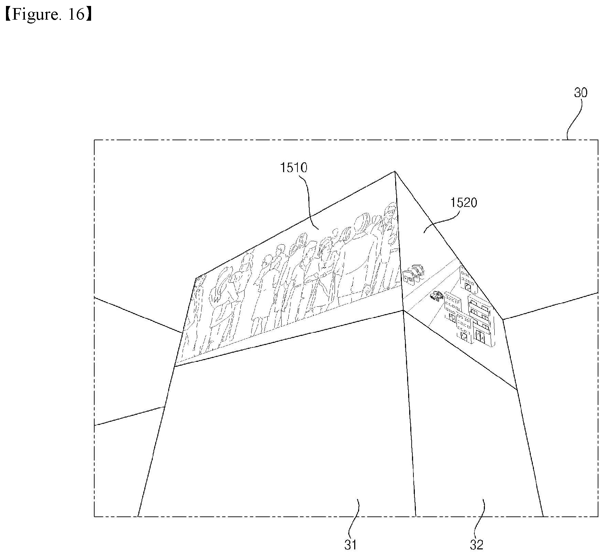

Referring to FIGS. 15 and 16, as the user configures the shape of the second shape 840 displayed on the UI image 800 corresponding to the first wall surface 31 and a second wall surface 32 of the real-world background 30, the shape of the projection shape may correspond to the first wall surface 31 and the second wall surface 32. Also, a shape of one of the plurality of sub-shapes may correspond to the first wall surface 31, and a shape of another one thereof may correspond to the second wall surface 32.

Meanwhile, a projected image 1500 may include a plurality of different images 1510 and 1520. For example, the projected image 1500 may be composed of a first image 1510 and a second image 1520 respectively stored in the memory 120. For example, the projected image 1500 may be composed of the first image 1510 received from a first external device and the second image 1520 received from a second external device.

At this time, the image projection apparatus 100 may transform coordinates of pixels of the first image 1510 corresponding to the shape of one of the plurality of sub-shapes and may transform coordinates of pixels of the second image 1520 corresponding to the shape of another one of the plurality of detailed shapes. The shape of the first image 1510 projected toward the first wall surface 31 may correspond to the first wall surface 31, and the shape of the second image 1520 projected toward the second wall surface 32 may correspond to the second wall surface 32. Accordingly, when the image projection apparatus 100 projects the projected image 1500 toward the real-world background 30, the first image 1510 may be displayed on the first wall surface 31 of the real-world background 30 without distortion, and the second image 1520 may be displayed on the second wall surface 32 without distortion.

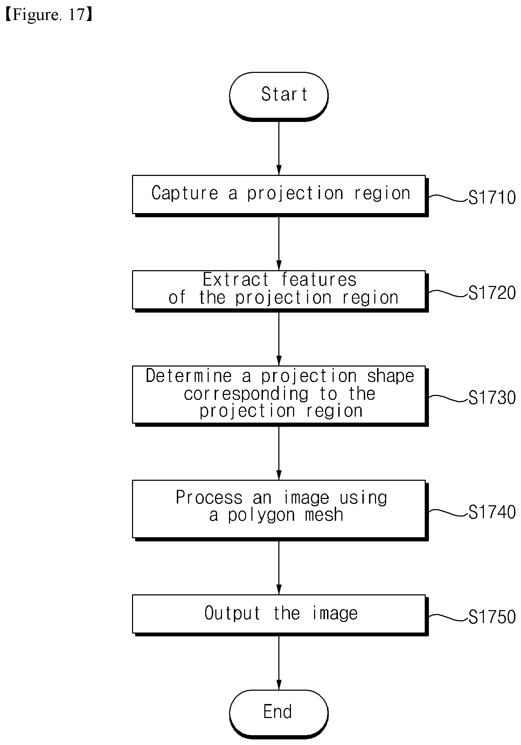

FIG. 17 is a flowchart illustrating an operating method of an image projection apparatus according to another embodiment of the present disclosure. Detailed descriptions of contents overlapping those described with reference to FIGS. 6 to 16 will be omitted.

Referring to FIG. 17, in the S1710 step, the image projection apparatus 100 may capture a projection region through the camera 130.

In the S1720 step, the image projection apparatus 100 may extract features of the projection region based on an image obtained by capturing the projection region. For example, the image projection apparatus 100 may identify an object included in the projection region. For example, the image projection apparatus 100 may extract feature points of the object included in the projection region, for example, edges, surfaces, vertices, and the like constituting the object.

According to one embodiment, the image projection apparatus 100 may extract features of the projection region using a learning model trained through machine learning. Machine learning may refer to a field researching methodologies for defining and solving various problems addressed in the field of artificial intelligence. An Artificial Neural Network (ANN) is a model used in machine learning and may refer to an overall model having a problem-solving capability and composed of artificial neurons (nodes) forming a network through synaptic connections. An artificial neural network may be defined by a connection pattern between neurons of different layers, a learning process updating model parameters, and an activation function generating an output value. An artificial neural network may include an input layer, an output layer, and optionally one or more hidden layers. Each layer may include one or more neurons, and the artificial neural network may include synapses connecting neurons to each other. In the artificial neural network, each neuron may output a function value of an activation function with respect to input signals input through synapses, weights, and biases. Model parameters may refer to parameters determined through learning and may include weights of synapse connections and biases of neurons. Hyperparameters may refer to parameters to be set before training in a machine learning algorithm and may include a learning rate, the number of iterations, a mini-batch size, an initialization function, and the like. Among artificial neural networks, machine learning implemented based on a Deep Neural Network (DNN) including a plurality of hidden layers is often referred to as deep learning, which is a subset of machine learning. Hereinafter, machine learning is used to include deep learning.

Examples of an object detection model using machine learning include a You Only Look Once (YOLO) model, which is a single-stage approach and a Regions with Convolution Neural Networks (R-CNN) model, which is a two-stage approach.

The YOLO model is a model capable of predicting an object existing in an image and a position of the object by viewing the image only once. The YOLO model divides an original image into grids having the same size. Then, for each grid, the number of boundary boxes designated in a predefined form around a center of the grid is predicted, and confidence is calculated based thereon. Thereafter, whether an object is included in the image or only a background exists alone is determined, and a position having high object confidence is selected to identify an object category.

The Faster R-CNN model is a model capable of detecting an object faster than an RCNN model and a Fast RCNN model. The Faster R-CNN model will be specifically described. First, a feature map is extracted from an image through a Convolution Neural Network (CNN) model. Based on the extracted feature map, a plurality of Regions of Interest (RoIs) are extracted. RoI pooling is performed for each region of interest. RoI pooling is a process of setting grids such that a feature map onto which a region of interest is projected corresponds to a predetermined H × W size and extracting a feature map having the H × W size by extracting the largest value for each cell included in the grid. A feature vector is extracted from the feature map having the H × W size, and identification information of an object may be obtained from the feature vector.

In the S1730 step, the image projection apparatus 100 may determine a projection shape corresponding to the projection region. For example, the image projection apparatus 100 may determine a shape, a position, a size, and the like of the projection shape based on vertices, edges, and the like of objects included in the projection region.

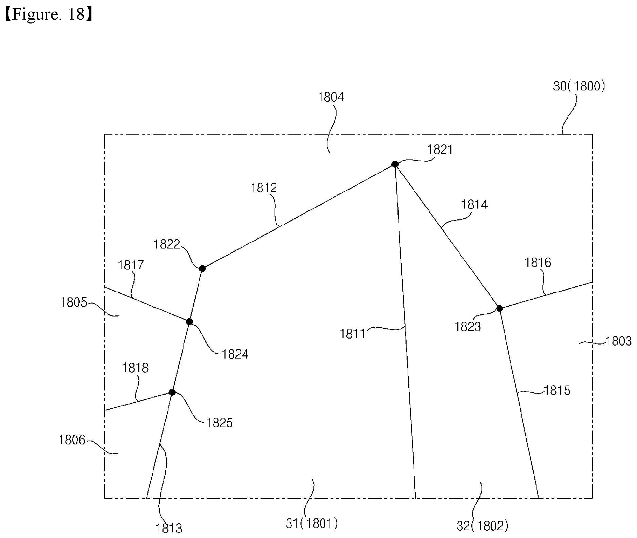

Referring to FIG. 18, the image projection apparatus 100 may capture the real-world background 30 through the camera 130 to obtain an image 1800 for the projection region. At this time, the image projection apparatus 100 may extract features of the projection region based on the image 1800 for the projection region. The image projection apparatus 100 may extract surfaces 1801 to 1806, edges 1811 to 1818, and vertices 1821 to 1825 constituting the projection region from the image 1800 for the projection region.

The image projection apparatus 100 may determine a projection shape based on features extracted for the projection region. For example, the image projection apparatus 100 may determine the projection shape according to a shape of a first surface 1801 corresponding to the first wall surface 31 based on edges 1811 to 1813 and vertices 1821 and 1822 constituting the first wall surface 31.

Meanwhile, when the projected image includes a plurality of different images, the image projection apparatus 100 may determine a plurality of sub-shapes based on features extracted for the projection region. For example, the image projection apparatus 100 may determine a first sub-shape according to the shape of the first surface 1801 corresponding to the first wall surface 31 based on edges 1811 to 1813 and vertices 1821 and 1822 constituting the first wall surface 31 and may determine a second sub-shape according to the shape of a second surface 1802 corresponding to the second wall surface 32 based on edges 1811, 1814, and 1815 and vertices 1821 and 1823 constituting the second wall surface 32.

Referring again to FIG. 17, in the S1740 step, the image projection apparatus 100 may process an image corresponding to a projected image using a polygon mesh.

In the S1750 step, the image projection apparatus 100 may output the image processed using the polygon mesh.

As described above, according to at least one embodiment of the present disclosure, as an image is processed in correspondence with the real-world background 30 in the image projection apparatus 100, the image may be projected onto various real-world backgrounds 30 without distortion.

Also, according to at least one embodiment of the present disclosure, by using a polygon mesh, an image may be processed in response to a change in the real-world background 30 onto which the image is projected.

Also, according to at least one embodiment of the present disclosure, a user may freely configure the real-world background 30 onto which the image is projected.

Also, according to at least one embodiment of the present disclosure, an image may be processed by automatically identifying the real-world background 30 onto which the image is projected using the camera 130.

Referring to FIGS. 1 to 18, an image projection apparatus 100 according to one aspect of the present disclosure may include a light source assembly 410 including at least one light source; a display element 440 configured to output an image based on light output from the light source assembly 410; an optical lens 480 configured to project the image output from the display element 440 onto a real-world background 30; and a controller 170, wherein the controller 170 may determine a shape corresponding to a predetermined region of the real-world background 30 onto which the image is projected, process an image to be projected based on a result of processing the shape using a polygon mesh, and control the display element 440 to output a predetermined image corresponding to the processed image.

Also, according to one aspect of the present disclosure, the controller 170 may output, through the display element 440, a user interface (UI) image 800 for configuring the shape and may determine the shape based on a user input for adjusting vertices of the shape included in the UI image 800.

Also, according to one aspect of the present disclosure, the image projection apparatus may further include a camera 130 disposed toward the real-world background 30, and the controller 170 may extract features of the real-world background 30 based on an image obtained through the camera 130 and may determine the shape based on the extracted features.

Also, according to one aspect of the present disclosure, the controller 170 may generate a plurality of triangles constituting the shape, determine a plurality of texture coordinates corresponding to the plurality of triangles, and transform coordinates of pixels of the image based on the plurality of texture coordinates.

Also, according to one aspect of the present disclosure, the controller 170 may determine coordinates of vertices of the plurality of triangles based on linear interpolation.

Also, according to one aspect of the present disclosure, the controller 170 may determine the plurality of texture coordinates corresponding to coordinates of vertices of each of the plurality of triangles using a UV mapping technique.

Also, according to one aspect of the present disclosure, the controller 170 may transform coordinates of pixels of the image using an affine transformation based on coordinates of vertices of the plurality of triangles and the plurality of texture coordinates.

Also, according to one aspect of the present disclosure, when the shape includes a plurality of sub-shapes, the controller 170 may process each of the plurality of sub-shapes using the polygon mesh, process a first image based on a result of processing a first sub-shape, process a second image based on a result of processing a second sub-shape, and control the display element 440 to output the predetermined image corresponding to the processed first image and the processed second image.

An operating method of the image projection apparatus 100 according to one aspect of the present disclosure may comprise determining a shape corresponding to a predetermined region of a real-world background 30 onto which an image is projected through an optical lens 480; processing an image to be projected based on a result of processing the shape using a polygon mesh; and outputting a predetermined image corresponding to the processed image.

Also, according to one aspect of the present disclosure, the determining of the shape may include outputting a user interface (UI) image for configuring the shape; and determining the shape based on a user input for adjusting vertices of the shape included in the UI image 800.

Also, according to one aspect of the present disclosure, the determining of the shape may include extracting features of the real-world background 30 based on an image obtained through a camera 130 disposed toward the real-world background 30; and determining the shape based on the extracted features.

Also, according to one aspect of the present disclosure, the processing of the image to be projected may include generating a plurality of triangles constituting the shape; determining a plurality of texture coordinates corresponding to the plurality of triangles; and transforming coordinates of pixels of the image based on the plurality of texture coordinates.

Also, according to one aspect of the present disclosure, the generating of the plurality of triangles may include determining coordinates of vertices of the plurality of triangles based on linear interpolation.

Also, according to one aspect of the present disclosure, the determining of the plurality of texture coordinates may include determining the plurality of texture coordinates corresponding to coordinates of vertices of each of the plurality of triangles using a UV mapping technique.

Also, according to one aspect of the present disclosure, the transforming of the coordinates of the pixels of the image may include transforming the coordinates of the pixels of the image using an affine transformation based on coordinates of vertices of the plurality of triangles and the plurality of texture coordinates.

The accompanying drawings of the present disclosure aim to facilitate understanding of the present disclosure and should not be construed as limited to the accompanying drawings. Also, the present disclosure is not limited to a specific disclosed form, but includes all modifications, equivalents, and substitutions without departing from the scope and idea of the present disclosure.

The operating method according to embodiments of the present disclosure may be implemented as codes that may be read by a processor in a recording medium that may be read by the processor. The processor-readable recording medium may include any type of recording devices in which data that may be read by the processor is stored. Examples of the processor-readable recording medium include ROM, RAM, CD-ROM, a magnetic tape, a floppy disc, optical data storage devices, and the like. In addition, the processor-readable recording medium also includes implementations in the form of carrier waves, e.g., transmission via the Internet. The processor-readable recording medium may be distributed over network-connected computer systems so that processor-readable codes may be stored and executed in a distributed fashion.

Specific embodiments have been described. However, the present disclosure is not limited to the specific embodiments and various modifications may be made without departing from the scope of the present disclosure claimed in the claims, and such modifications should not be individually understood from technical concepts or prospects of the present disclosure.

## Claims

1. An image projection apparatus comprising:
a light source assembly including at least one light source;
a display element configured to output an image based on light output from the light source assembly;
an optical lens configured to project the image output from the display element onto a real-world background; and
a controller,
wherein the controller is configured to:
determine a shape corresponding to a predetermined region of the real-world background onto which the image is projected;
process an image to be projected based on a result of processing of the shape using a polygon mesh; and
control the display element so that a predetermined image corresponding to the processed image is output.

2. The apparatus of claim 1, wherein the controller is configured to:
output, through the display element, a user interface (UI) image for configuring the shape; and
determine the shape based on a user input for adjusting vertices of the shape included in the UI image.

3. The apparatus of claim 1, further comprising:
a camera disposed toward the real-world background,
wherein the controller is configured to:
extract features of the real-world background based on an image obtained through the camera; and
determine the shape based on the extracted features.

4. The apparatus of claim 1, wherein the controller is configured to:
generate a plurality of triangles constituting the shape;
determine a plurality of texture coordinates corresponding to the plurality of triangles; and
transform coordinates of pixels of the image based on the plurality of texture coordinates.

5. The apparatus of claim 4, wherein the controller is configured to determine coordinates of vertices of the plurality of triangles based on linear interpolation.

6. The apparatus of claim 4, wherein the controller is configured to determine the plurality of texture coordinates corresponding to coordinates of vertices of each of the plurality of triangles using a UV mapping technique.

7. The apparatus of claim 4, wherein the controller is configured to transform coordinates of pixels of the image using an affine transformation based on coordinates of vertices of the plurality of triangles and the plurality of texture coordinates.

8. The apparatus of claim 1, wherein, when the shape includes a plurality of sub-shapes, the controller is configured to:
process each of the plurality of sub-shapes using the polygon mesh;
process a first image based on a result of processing a first sub-shape;
process a second image based on a result of processing a second sub-shape; and
control the display element to output the predetermined image corresponding to the processed first image and the processed second image.

9. An operating method of an image projection apparatus, the operating method comprising:
determining a shape corresponding to a predetermined region of a real-world background onto which an image is projected through an optical lens;
processing an image to be projected based on a result of processing the shape using a polygon mesh; and
outputting a predetermined image corresponding to the processed image.

10. The method of claim 9, wherein the determining of the shape includes:
outputting a user interface (UI) image for configuring the shape; and
determining the shape based on a user input for adjusting vertices of the shape included in the UI image.

11. The method of claim 9, wherein the determining of the shape includes:
extracting features of the real-world background based on an image obtained through a camera disposed toward the real-world background; and
determining the shape based on the extracted features.

12. The method of claim 9, wherein the processing of the image to be projected includes:
generating a plurality of triangles constituting the shape;
determining a plurality of texture coordinates corresponding to the plurality of triangles; and
transforming coordinates of pixels of the image based on the plurality of texture coordinates.

13. The method of claim 12, wherein the generating of the plurality of triangles includes determining coordinates of vertices of the plurality of triangles based on linear interpolation.

14. The method of claim 12, wherein the determining of the plurality of texture coordinates includes determining the plurality of texture coordinates corresponding to coordinates of vertices of each of the plurality of triangles using a UV mapping technique.

15. The method of claim 12, wherein the transforming of the coordinates of the pixels of the image includes transforming the coordinates of the pixels of the image using an affine transformation based on coordinates of vertices of the plurality of triangles and the plurality of texture coordinates.
